# EUROPEAN PATENT SPECIFICATION

(11) **EP 1 008 023 B1**
(45) Date of publication and mention of the grant of the patent: **06.02.2008**
(21) Application number: 98940289.6
(22) Date of filing: 25.08.1998
(51) Int. Cl.: G06F 1/00

(54) **PROCEDURE FOR ACCESSING A SERVICE IN A DATA COMMUNICATION SYSTEM, AND A DATA COMMUNICATION SYSTEM**
VERFAHREN UM EINEN SERVICE IN EINEM DATEN-KOMMUNIKATIONS-SYSTEM IN ANSPRUCH ZU NEHMEN UND DATEN-KOMMUNIKATIONS-SYSTEM
PROCEDURE D'ACCES A UN SERVICE DANS UN SYSTEME DE COMMUNICATION DE DONNEES, ET SYSTEME DE COMMUNICATION DE DONNEES

(30) Priority: 27.08.1997 FI 973528
(43) Date of publication of application: 14.06.2000
(73) Proprietor: TeliaSonera Finland Oyj, 00510 Helsinki (FI)
(72) Inventor: LINKOLA, Janne, FIN-02210 Espoo (FI); HOKKANEN, Tuomo, FIN-00820 Helsinki (FI)
(74) Representative: Simmelvuo, Markku Kalevi
(86) International application number: PCT/FI1998/000653
(87) International publication number: WO 1999/010793

(56) References cited:
- EP-A1- 0 768 595
- WO-A1-97/31306
- WO-A2-96/00485
- FI-A- 960 820
- US-A- 5 373 559
- US-A- 5 812 764

## Description

The present invention relates to a procedure as defined in the preamble of claim 1. Moreover, the invention relates to a system as defined in the preamble of claim 6.

Reliable user identification is a prerequisite for the use of many services provided in the general telecommunication network or in other data networks. Such services include e.g. bank services. The service may involve significant economic effects and therefore the service provider wants to ascertain the user's identity before making the service available.

Very often, e.g. in conjunction with bank services, the user is identified by means of passwords. Usually these passwords are expendable. The service provider or an identifying party authorised by the service provider has given the user beforehand a number of passwords (e.g. four-digit numbers), one of which the customer uses each time he/she needs the services. When a list of passwords is about to be exhausted, the service provider (or a party authorised by the service provider) sends the user a new list of passwords. Thus, the user always has a sufficient number of passwords for his/her needs in the near future.

A feature typical of prior-art solutions is that the customer has to manually input an expendable password when logging on to a server. Often the password is entered by pressing the keys of a telephone set, causing the data to be transmitted to the server using tone frequency transmission, so-called DTMF (dual tone multifrequency) codes. In addition, there are many other methods for transmitting a password, such as the short-message service in the GSM network (GSM, Global System for Mobile Communications; in the present description, GSM network refers to any mobile communication system based on the GSM specifications). However, the essential point is that the user has to manually input the password him/herself. This is in many cases quite difficult for the user.

Another feature typical of prior-art solutions is that the service provider must send a new set of passwords by using a rather unreliable transmission mechanism. The most commonly used method is to send them by mail. The problem is that the letter containing the passwords may end up in the wrong hands.

WO-A-97/31306, EP-A-0768595, US-A-5373559 and WO-A-96/00485 all describe procedures for logging on to and accessing resources via a network involving the use of passwords.

The object of the present invention is to eliminate the problems described above.

A specific object of the present invention is to disclose a completely new type of procedure and system for transmitting passwords between a user's telephone apparatus and a server.

A further object of the invention is to facilitate the use of services requiring passwords by reducing the number of routines necessitating user interaction in conjunction with the use of the services without making any compromises in regard of safety of the services.

The procedure of the invention is characterised by what is presented in claim 1. The system of the invention is characterised by what is presented in claim 6.

In the procedure of the invention for accessing a service in a data communication system, in which the service provider gives the user of a service a number of expendable passwords by means of which the user can access the service via a telecommunication and/or data network, a connection is set up from a terminal device to a server and a password is sent at log-on to the service, the password is identified and access to the service is allowed and/or denied based on the password supplied.

According to the invention, in the procedure, a set of passwords is stored in the terminal device, the right password is selected from the stored set of passwords at log-on to a predetermined service, and the password is automatically added to a connection setup signal to be transmitted from the terminal device to the server.

Correspondingly, in the system of the invention, the terminal device comprises means for storing a set of passwords and selecting the right password from the stored set of passwords at log-on to a predetermined service to allow automatic addition of the password to a connection setup signal to be transmitted from the terminal device to the server.

The invention has the advantage that it discloses a completely new type of mechanism for the transmission of passwords between a user's telephone apparatus and a server. A further advantage of the invention is that it facilitates the use of services requiring passwords by reducing the number of routines necessitating user interaction in conjunction with the use of the services. This is done without any compromises regarding the safety of the services.

In an embodiment of the procedure, the used ones of the passwords in a set of passwords are registered.

In an embodiment of the procedure, the set of passwords in the terminal device is updated from the server via the telecommunication and/or data network.

In an embodiment of the procedure, an order for a new set of passwords is automatically sent to the server once the previous set of passwords has been exhausted.

In an embodiment of the procedure, several sets of passwords corresponding to different services are stored in the terminal device, and in connection setup the set of passwords corresponding to the service to be accessed in each case is selected.

In an embodiment of the system, the terminal device comprises means for registering the used ones of the passwords in a set of passwords.

In an embodiment of the system, the server comprises means for updating the set of passwords in the terminal device via a telecommunication and/or data network, and the terminal device comprises means for receiving a set of passwords.

In an embodiment of the system, the terminal device comprises means for automatic ordering of a new set of passwords from the server after the previous set of passwords has been exhausted.

In an embodiment of the system, the terminal device comprises means for storing several sets of passwords corresponding to different services.

In an embodiment of the system, the terminal device comprises means for selecting the set of passwords corresponding to the service to be used in each case.

In an embodiment of the system, the data communication system comprises a wired network and the terminal device is a telecommunication terminal, such as a telephone, in the wired network.

In an embodiment of the system, the data communication system comprises a mobile communication network, such as a GSM network, and the terminal device is a mobile station, such as a GSM telephone.

In an embodiment of the system, the terminal device is a GSM telephone, and the means for using said password management functions are disposed in a subscriber identity module, such as a SIM card.

In an embodiment of the system, in the connection setup between the subscriber identity module and the server, the transmission of passwords is effected by making use of the called subscriber number.

In an embodiment of the system, the software means of the subscriber identity module are designed to identify the service on the basis of its identifier data, such as the telephone number, and to add a number of additional digits forming a password to the end of the telephone number of the service during call setup.

In an embodiment of the system, the subscriber identity module is provided with a service directory containing information specifying the services, the service identifier data and the names of the password files to be used in conjunction with the services.

In an embodiment of the system, the service directory is provided with a pointer for each service, which pointer has been arranged to point to the first unused password in the set of passwords and, after the password has been used, to move on to point to the next unused password in sequence.

In an embodiment of the system, the means for ordering new passwords and transmitting them between the server and the subscriber identity module comprise the short-message service (SMS-PP service) of the GSM network.

In the following, the invention will be described in detail by the aid of an application example.

The invention is based on providing the telephone apparatus with an extra module (physical or logical) allowing a functionality which creates additional signals in the communication between the telephone apparatus and the server in conjunction with a connection setup related to a service and/or additional fields and/or components or equivalent in the communication between the telephone apparatus and the server, the expendable password being transmitted in these additional signals/fields/components. This is done automatically without the user becoming aware of it. The module registers the passwords used each time and therefore always knows which is the correct password to be used at log-on. The user will find this type of services easier to use, but in respect of data security they are of the same level with services in which the user must input the passwords him/herself. The extra module is also able to receive new passwords from the server and it can even order new passwords when necessary.

The extra module in the telephone apparatus may support simultaneous services requiring expendable passwords. For this purpose, the extra module contains a directory of services supported (in short, a service directory), which is used to identify a service requiring expendable passwords and to find the correct list of passwords and also to find the correct position in the list.

The best embodiment of the invention is a mobile station, such as a GSM telephone, whose subscriber identity module contains an application that uses SIM Application Toolkit commands to accomplish the extra functionality described above. The password transmission mechanism used in conjunction with the setup of a service connection between the SIM card and the server consists of the use of the called subscriber number, i.e. the so-called B-identifier. The application on the SIM card uses the 'Call Control by SIM' command as defined in the TS GSM 11.14 specification, and in practice the application processes each called subscriber number, in other words, it compares the called subscriber number with the numbers stored in the service directory, and when it detects that the call is addressed to one of the stored numbers, it appends to the end of the telephone number a required number of additional digits in which the expendable password is encoded. For example, when the user is making a call to the number 0800-XYZ-123456, the application on the SIM card will change the number to the form 0800-XYZ-123456-KLMN. The last four digits (KLMN) of the modified number are the expendable password added by the SIM card.

The service directory may be implemented as a special file on the SIM card. The special file contains information specifying the services supported, their identifier data and the names of the password files to be used in conjunction with the services. Moreover, for each service, the service directory contains a pointer that points to the current position in the list of passwords. Table 1 presents an example of the information elements contained in the special file.

For example, service 1 is identified from the fact that the user is calling the number 0800123. The application knows that it has to append to the end of the number an expendable password, which is found in the file 2FF5. In this instance, the password to be used is the thirteenth one in this file.

**Table 1. Service directory as used in an embodiment of the invention.**

| **Service identifier** | **Method** | **Identifiers associated with method** | **Name of password file** | **Pointer** | **Total number of passwords** |
|---|---|---|---|---|---|
| 1 | BID | 0800123 | 2FF5 | 13 | 100 |
| 2 | BID | 0800456 | 2FF4 | 11 | 100 |
| 3 | SMS | SMSC:+02 | 2FF6 | 2 | 9 |
| | | 0202800 | | | |
| | | BID:8756 | | | |

The server in the public telecommunication network receives the expendable password in the signalling in the telephone network. The server takes the last four digits of the B-identifier and assumes that they constitute an expendable password. The server compares the expendable password thus obtained with its own information as to the user's next password. This is done by methods already known at present.

If the service requires the use of a user name at log-on to the service, the service directory may contain stored user names for each service. The user name can be appended to the connection setup signal in the same way as the password.

For the transmission of new passwords between the server and the application of the invention on the SIM card, it is possible to use the SMS-PP service of the GSM network. If the SIM card sends an order for new passwords, this is effected using the SMS-PP/MO (Mobile Originated) service and the passwords are transmitted to the SIM card using the SMS/PP-MT service.

The functionality of the application is divided between three blocks. The first block, an appending block, recognises the need to add an expendable password and sends a request to find the password to a password search block. Once the search block has found the right password, the appending block appends the expendable password it has received to the B-identifier and allows the call to proceed further from the telephone apparatus.

In the best embodiment of the invention, a block for adding new passwords works completely independently of the other blocks. In practice, it monitors the SMS Data Download traffic consistent with TS GSM 11.14 version 5.1.0 received by the SIM card and detects the appearance of new passwords on the card. The block for adding new passwords stores the new passwords received in the SMS Data Download message to a suitable special file on the SIM card and makes an appropriate addition to the service directory so that the search block will be able to find the new passwords. This new password file may be a combination that contains the last unused passwords of the previous file and the completely new passwords just received.

The invention is not restricted to the application example described above, but many variations are possible within the scope of the inventive idea defined by the claims.

## Claims

1. Procedure for accessing a service in a data communication system, said procedure comprising the steps of:
providing a user of a service with a set of expendable passwords for accessing said service via a telecommunication and/or data network,
setting up a connection to a server providing said service by using a terminal device,
transmitting a password to the service at log-on to said service,
identifying the password at said service, and
allowing/denying access to the service based on the password supplied,
**characterised in that** the procedure further comprises the steps of:
sending from the server providing the service to the terminal device a set of expendable passwords,
storing the set of expendable passwords in the terminal device,
selecting, by using the terminal device, a password required by a pre-determined service from the stored set of passwords at log-on to said service,
automatically adding by using the terminal device, said selected password to a connection setup signal to be transmitted at said log-on from the terminal device to the server providing said pre-determined service.

2. Procedure as defined in claim 1, **characterised in that** the used ones of the passwords in a set of passwords are registered.

3. Procedure as defined in claim 1 or 2, **characterised in that** the set of passwords in the terminal device is updated from the server via the telecommunication and/or data network.

4. Procedure as defined in any one of claims 1 - 3, **characterised in that** an order for a new set of passwords is automatically sent to the server once the preceding set of passwords has been exhausted.

5. Procedure as defined in any one of claims 1 - 4, **characterised in that** several sets of passwords corresponding to different services are stored in the terminal device and, during connection setup, the set of passwords corresponding to the service to be accessed in each case is selected.

6. Data communication system in which a user of a service is provided with a set of expendable passwords for accessing said service via a telecommunication and/or data network, said system comprising:
a terminal device comprising means for sending a password to the service at log-on to said service,
a server to which the terminal device sets up a connection, said server comprising means for identifying the password and for allowing/denying access to the service on the basis of the password supplied,
**characterised in that** the terminal device further comprises:
means for receiving from the server providing the service to the terminal device a set of expendable passwords,
storage means for storing the set of expendable passwords,
selection means for selecting a password required by a pre-determined service from the stored set of passwords at log-on to said service, and
adding means for the automatic addition of the selected password to a connection setup signal to be transmitted at said log-on from the terminal device to the server providing said pre-determined service.

7. System as defined in claim 6, **characterised in that** the terminal device comprises means for registering the used ones of the passwords in the set of passwords.

8. System as defined in claim 6 or 7, **characterised in that** the server comprises means for updating the set of passwords in the terminal device via the telecommunication and/or data network, and that the terminal device comprises means for receiving a set of passwords.

9. System as defined in any one of claims 6 - 8, **characterised in that** the terminal device comprises means for automatic ordering of a new set of passwords from the server after the previous set of passwords has been exhausted.

10. System as defined in any one of claims 6 - 9, **characterised in that** the terminal device comprises means for storing several sets of passwords corresponding to different services.

11. System as defined in claim 10, **characterised in that** the terminal device comprises means for selecting the set of passwords corresponding to the service to be used in each case.

12. System as defined in any one of claims 6 - 11, **characterised in that** the data communication system comprises a wired network and the terminal device is a telecommunication terminal, such as a telephone, in the wired network.

13. System as defined in any one of claims 6 - 12, **characterised in that** the data communication system comprises a mobile communication network, such as a GSM network, and the terminal device is a mobile station, such as a GSM telephone.

14. System as defined in any one of claims 6 - 13, **characterised in that** the terminal device is a GSM telephone, and that the means for using said password management functions are disposed in a subscriber identity module, such as a SIM card.

15. System as defined in claim 14, **characterised in that**, in the connection setup between the subscriber identity module and the server, the transmission of passwords is effected by making use of the called subscriber number.

16. System as defined in claim 14 or 15, **characterised in that** the software means of the subscriber identity module are designed to identify the service on the basis of its identifier data, such as the telephone number, and to append a number of additional digits forming a password to the end of the telephone number of the service during call setup.

17. System as defined in any one of claims 13 - 16, **characterised in that** the subscriber identity module is provided with a service directory containing information specifying the services, the service identifier data and the names of the password files to be used in conjunction with the services.

18. System as defined in claim 17, **characterised in that** the service directory is provided with a pointer for each service, which pointer has been arranged to point to the first unused password in the set of passwords and, after this password has been used, to move on to point to the next unused password in sequence.

19. System as defined in any one of claims 13 - 18, **characterised in that** the means for ordering new passwords and transmitting them between the server and the subscriber identity module comprise the short-message service (SMS-PP service) of the GSM network.

## Patentansprüche

1. Verfahren zum Zugreifen auf einen Dienst in einem Datenkommunikationssystem, wobei das Verfahren die folgenden Schritte umfasst:
Ausstatten eines Benutzers eines Dienstes mit einem Satz von Einmalpasswörtern zum Zugreifen auf den Dienst über ein Telekommunikations- und/oder Datennetz,
Aufbauen einer Verbindung zu einem den Dienst bereitstellenden Server unter Verwendung eines Endgeräts,
Übertragen eines Passworts an den Dienst bei Anmeldung zum Dienst,
Identifizieren des Passworts beim Dienst, und
Gestatten/Verweigern von Zugriff auf den Dienst auf der Grundlage des zugeführten Passworts,
**dadurch gekennzeichnet, dass** das Verfahren weiter die folgenden Schritte umfasst:
Senden eines Satzes von Einmalpasswörtern vom Server, der den Dienst dem Endgerät bereitstellt,
Speichern des Satzes von Einmalpasswörtern im Endgerät,
Auswählen unter Verwendung des Endgeräts eines von einem vorbestimmten Dienst benötigten Passworts aus dem gespeicherten Satz von Passwörtern bei Anmeldung zum Dienst, und
Automatisches Hinzufügen unter Verwendung des Endgeräts des ausgewählten Passworts an ein Verbindungsaufbausignal, das bei der Anmeldung vom Endgerät an den den vorbestimmten Dienst bereitstellenden Server übertragen wird.

2. Verfahren gemäß Anspruch 1, **dadurch gekennzeichnet, dass** die benutzten Passwörter in einem Satz von Passwörtern registriert werden.

3. Verfahren gemäß Anspruch 1 oder 2, **dadurch gekennzeichnet, dass** der Satz von Passwörtern im Endgerät vom Server über das Telekommunikations- und/oder Datennetz aktualisiert wird.

4. Verfahren gemäß einem der Ansprüche 1 - 3, **dadurch gekennzeichnet, dass** eine Bestellung eines neuen Satzes von Passwörtern automatisch an den Server gesendet wird, sobald der vorhergehende Satz von Passwörtern aufgebraucht ist.

5. Verfahren gemäß einem der Ansprüche 1 - 4, **dadurch gekennzeichnet, dass** mehrere Sätze von verschiedenen Diensten entsprechenden Passwörtern im Endgerät gespeichert werden und während eines Verbindungsaufbaus der Satz von Passwörtern, der dem Dienst entspricht, auf den in jedem Fall zuzugreifen ist, ausgewählt wird.

6. Datenkommunikationssystem, bei dem ein Benutzer eines Dienstes mit einem Satz von Einmalpasswörtern zum Zugreifen auf den Dienst über ein Telekommunikations- und/oder Datennetz ausgestattet wird, wobei das System umfasst:
ein Endgerät, welches ein Mittel zum Senden eines Passworts an den Dienst bei Anmeldung zum Dienst umfasst,
einen Server, zu dem das Endgerät eine Verbindung aufbaut, wobei der Server ein Mittel zum Identifizieren des Passworts und zum Gestatten/Verweigern von Zugriff auf den Dienst auf der Grundlage des zugeführten Passworts umfasst,
**dadurch gekennzeichnet, dass** das Endgerät weiter umfasst:
Mittel zum Empfangen eines Satzes von Einmalpasswörtern vom Server, der den Dienst dem Endgerät bereitstellt,
Speichermittel zum Speichern des Satzes von Einmalpasswörtern,
Auswahlmittel zum Auswählen eines von einem vorbestimmten Dienst benötigten Passworts aus dem gespeicherten Satz von Passwörtern bei Anmeldung zum Dienst, und
Hinzufügemittel zur automatischen Hinzufügung des ausgewählten Passwortes zu einem Verbindungsaufbausignal, das bei der Anmeldung vom Endgerät an den den vorbestimmten Dienst bereitstellenden Server übertragen wird.

7. System gemäß Anspruch 6, **dadurch gekennzeichnet, dass** das Endgerät ein Mittel zum Registrieren der benutzten Passwörter in dem Satz von Passwörtern umfasst.

8. System gemäß Anspruch 6 oder 7, **dadurch gekennzeichnet, dass** der Server ein Mittel zum Aktualisieren des Satzes von Passwörtern im Endgerät über das Telekommunikations- und/oder Datennetz umfasst, und dass das Endgerät ein Mittel zum Empfangen eines Satzes von Passwörtern umfasst.

9. System gemäß einem der Ansprüche 6 - 8, **dadurch gekennzeichnet, dass** das Endgerät ein Mittel zum automatischen Bestellen eines neuen Satzes von Passwörtern vom Server umfasst, nachdem der vorherige Satz von Passwörtern aufgebraucht wurde.

10. System gemäß einem der Ansprüche 6 - 9, **dadurch gekennzeichnet, dass** das Endgerät ein Mittel zum Speichern mehrerer Sätze von verschiedenen Diensten entsprechenden Passwörtern umfasst.

11. System gemäß Anspruch 10, **dadurch gekennzeichnet, dass** das Endgerät ein Mittel zum Auswählen des Satzes von Passwörtern umfasst, die dem Dienst entsprechen, der in jedem Fall zu verwenden ist.

12. System gemäß einem der Ansprüche 6 - 11, **dadurch gekennzeichnet, dass** das Datenkommunikationssystem ein verkabeltes Netz umfasst und das Endgerät ein Telekommunikationsendgerät, wie ein Telefon, im verkabelten Netz ist.

13. System gemäß einem der Ansprüche 6 - 12, **dadurch gekennzeichnet, dass** das Datenkommunikationssystem ein Mobilkommunikationsnetz, wie ein GSM-Netz, umfasst, und das Endgerät eine Mobilstation, wie ein GSM-Telefon, ist.

14. System gemäß einem der Ansprüche 6 - 13, **dadurch gekennzeichnet, dass** das Endgerät ein GSM-Telefon ist, und dass die Mittel zum Benutzen der Passwortmanagementfunktionen in einem Teilnehmeridentitätsmodul, wie einer SIM-Karte, eingerichtet sind.

15. System gemäß Anspruch 14, **dadurch gekennzeichnet, dass** beim Verbindungsaufbau zwischen dem Teilnehmeridentitätsmodul und dem Server die Übertragung von Passwörtern ausgeführt wird, indem von der angerufenen Teilnehmernummer Gebrauch gemacht wird.

16. System gemäß Anspruch 14 oder 15, **dadurch gekennzeichnet, dass** die Softwaremittel des Teilnehmeridentitätsmoduls entworfen sind, um den Dienst auf der Grundlage seiner Identifikatordaten, wie die Telefonnummer, zu identifizieren und um eine Anzahl von zusätzlichen, ein Passwort bildenden Ziffern an das Ende der Telefonnummer des Dienstes während eines Anrufaufbaus anzuhängen.

17. System gemäß einem der Ansprüche 13 - 16, **dadurch gekennzeichnet, dass** das Teilnehmeridentitätsmodul mit einem Dienstverzeichnis ausgestattet ist, das die Dienste spezifizierende Information enthält, wobei die Dienstidentifikatordaten und die Namen der Passwortdateien in Verbindung mit den Diensten verwendet werden.

18. System gemäß Anspruch 17, **dadurch gekennzeichnet, dass** das Dienstverzeichnis mit einem Zeiger für jeden Dienst ausgestattet ist, wobei der Zeiger angeordnet wurde, auf das erste unbenutzte Passwort in dem Satz von Passwörtern zu zeigen, und, nachdem dieses Passwort verwendet worden ist, weiterzugehen, um auf das nächste unbenutzte Passwort in Folge zu zeigen.

19. System gemäß einem der Ansprüche 13 - 18, **dadurch gekennzeichnet, dass** die Mittel zum Bestellen neuer Passwörter und zu ihrem Übertragen zwischen dem Server und dem Teilnehmeridentitätsmodul den Kurznachrichtendienst (SMS-PP Dienst) des GSM-Netzes umfassen.

## Revendications

1. Procédure permettant l'accès à un service dans un système de communication de données, ladite procédure comprenant les étapes consistant à :
fournir à un utilisateur d'un service un ensemble de mots de passe à usage unique permettant d'accéder audit service par l'intermédiaire d'un réseau de télécommunication et/ou de données,
établir une connexion à un serveur fournissant ledit service en utilisant un dispositif de terminal,
transmettre un mot de passe au service au moment de la connexion audit service,
identifier le mot de passe au niveau dudit service, et
autoriser/refuser l'accès au service sur la base du mot de passe fourni,
**caractérisée en ce que** la procédure comprend en outre les étapes consistant à :
envoyer depuis le serveur fournissant le service au dispositif de terminal un ensemble de mots de passe à usage unique,
enregistrer l'ensemble de mots de passe à usage unique dans le dispositif de terminal,
sélectionner, en utilisant le dispositif de terminal, un mot de passe requis par un service prédéterminé parmi l'ensemble de mots de passe enregistré au moment de la connexion audit service, et
ajouter automatiquement, en utilisant le dispositif de terminal, ledit mot de passe sélectionné à un signal d'établissement de la connexion devant être transmis au moment de ladite connexion, du dispositif de terminal au serveur fournissant ledit service prédéterminé.

2. Procédure selon la revendication 1, **caractérisée en ce que** les mots de passe utilisés parmi l'ensemble de mots de passe sont enregistrés.

3. Procédure selon la revendication 1 ou 2, **caractérisée en ce que** l'ensemble de mots de passe dans le dispositif de terminal est mis à jour depuis le serveur par l'intermédiaire du réseau de télécommunication et/ou de données.

4. Procédure selon l'une quelconque des revendications 1 à 3, **caractérisée en ce qu'**une commande d'un nouvel ensemble de mots de passe est automatiquement envoyée au serveur une fois que l'ensemble précédent de mots de passe est épuisé.

5. Procédure selon l'une quelconque des revendications 1 à 4, **caractérisée en ce que** plusieurs ensembles de mots de passe correspondant aux différents services sont enregistrés dans le dispositif de terminal et, pendant l'établissement de la connexion, l'ensemble de mots de passe correspondant au service devant être accédé dans chaque cas est sélectionné.

6. Système de communication de données dans lequel on fournit à un utilisateur d'un service un ensemble de mots de passe à usage unique permettant d'accéder audit service par l'intermédiaire d'un réseau de télécommunication et/ou de données, ledit système comprenant :
un dispositif de terminal comprenant des moyens permettant d'envoyer un mot de passe au service au moment de la connexion audit service,
un serveur avec lequel le dispositif de terminal établit une connexion, ledit serveur comprenant des moyens pour identifier le mot de passe et autoriser/de refuser l'accès au service sur la base du mot de passe fourni,
**caractérisé en ce que** le dispositif de terminal comprend en outre :
des moyens permettant de recevoir depuis le serveur fournissant le service au dispositif de terminal un ensemble de mots de passe à usage unique,
des moyens d'enregistrement permettant d'enregistrer l'ensemble de mots de passe à usage unique,
des moyens de sélection permettant de sélectionner un mot de passe requis par un service prédéterminé parmi l'ensemble enregistré de mots de passe au moment de la connexion audit service, et
des moyens d'addition permettant d'ajouter automatiquement le mot de passe sélectionné à un signal d'établissement de la connexion devant-être transmis, au moment de ladite connexion, du dispositif de terminal au serveur fournissant ledit service prédéterminé.

7. Système selon la revendication 6, **caractérisé en ce que** le dispositif de terminal comprend des moyens permettant d'enregistrer les mots de passe utilisés parmi l'ensemble de mots de passe.

8. Système selon la revendication 6 ou 7, **caractérisé en ce que** le serveur comprend des moyens permettant de mettre à jour l'ensemble de mots de passe dans le dispositif de terminal par l'intermédiaire du réseau de télécommunication et/ou de données, et **en ce que** le dispositif de terminal comprend des moyens permettant de recevoir un ensemble de mots de passe.

9. Système selon l'une quelconque des revendications 6 à 8, **caractérisé en ce que** le dispositif de terminal comprend des moyens permettant de commander automatiquement un nouvel ensemble de mots de passe depuis le serveur après que l'ensemble précédent de mots de passe a été épuisé.

10. Système selon l'une quelconque des revendications 6 à 9, **caractérisé en ce que** le dispositif de terminal comprend des moyens permettant d'enregistrer plusieurs ensembles de mots de passe correspondant à différents services.

11. Système selon la revendication 10, **caractérisé en ce que** le dispositif de terminal comprend des moyens permettant de sélectionner l'ensemble de mots de passe correspondant au service devant être utilisé dans chaque cas.

12. Système selon l'une quelconque des revendications 6 à 11, **caractérisé en ce que** le système de communication de données comprend un réseau câblé et le dispositif de terminal est un terminal de télécommunication, tel qu'un téléphone, dans le réseau câblé.

13. Système selon l'une quelconque des revendications 6 à 12, **caractérisé en ce que** le système de communication de données comprend un réseau de communication mobile, tel qu'un réseau GSM, et le dispositif de terminal est une station mobile, tel qu'un téléphone GSM.

14. Système selon l'une quelconque des revendications 6 à 13, **caractérisé en ce que** le dispositif de terminal est un téléphone GSM, et **en ce que** les moyens permettant d'utiliser lesdites fonctions de gestion des mots de passe sont disposés dans un module d'identité d'abonné, tel qu'une carte SIM.

15. Système selon la revendication 14, **caractérisé en ce que**, dans l'établissement de la connexion entre le module d'identité d'abonné et le serveur, la transmission des mots de passe est effectuée à l'aide du numéro de l'abonné appelé.

16. Système selon la revendication 14 ou 15, **caractérisé en ce que** les moyens de logiciel du module d'identité d'abonné sont conçus pour identifier le service d'après ses données d'identificateur, comme le numéro de téléphone, et pour ajouter un nombre de chiffres supplémentaires formant un mot de passe à la fin du numéro de téléphone du service pendant l'établissement de l'appel.

17. Système selon l'une quelconque des revendications 13 à 16, **caractérisé en ce que** le module d'identité d'abonné est équipé d'un répertoire de service contenant des informations spécifiant les services, les données d'identificateur du service et les noms des fichiers de mots de passe devant être utilisés conjointement avec les services.

18. Système selon la revendication 17, **caractérisé en ce que** le répertoire de service est équipé d'un pointeur pour chaque service, lequel pointeur a été agencé de façon à pointer le premier mot de passe non-utilisé dans l'ensemble de mots de passe et, après que ce mot de passe a été utilisé, se déplacer pour pointer le mot de passe non-utilisé suivant dans la séquence.

19. Système selon l'une quelconque des revendications 13 à 18, **caractérisé en ce que** les moyens permettant de commander de nouveaux mots de passe et de les transmettre entre le serveur et le module d'identité d'abonné comprennent le service de messages courts (service SMS-PP) du réseau GSM.
